Europäisches Patentamt

European Patent Office

Office européen des brevets

(11) Publication number: **0 222 447**
**A1**

## (12) EUROPEAN PATENT APPLICATION

(21) Application number: 86201922.1

(51) Int. Cl.⁴: **H01M 2/12** , F16K 17/36

(22) Date of filing: 04.11.86

(30) Priority: 12.11.85 SE 8505328

(43) Date of publication of application:
20.05.87 Bulletin 87/21

(84) Designated Contracting States:
AT CH DE ES FR GB IT LI

(71) Applicant: **SAB NIFE AB**
**Box 515**
**S-261 24 Landskrona(SE)**

(72) Inventor: **Enar, Lennart Frode Per**
**Mockebo**
**S-572 00 Oskarshamn(SE)**

(74) Representative: **Petri, Stellan et al**
**c/o SAB NIFE AB Box 515**
**S-261 24 Landskrona(SE)**

(54) **Leak- and vibration-proof valve.**

(57) A leak-proof valve for an electro-chemical accumulator. Inside a valve housing (14) is a horizontal plane (16) with a valve opening (18), via which the accumulator casing (12) is intended to be in communication with the atmosphere in the normal position.

According to the invention a valve disc (20) is spring biased against the top surface of the valve opening (18) and has a valve spindle (26) projecting into a space (28) in the valve housing, which has a cone-shaped bottom (30) and also contains a ball - (32). With the valve housing in an upright position the valve opening is uncovered. With the valve housing in an inclined position the ball moves away from the valve spindle, so that the valve disc seals the valve opening.

Fig. 2

EP 0 222 447 A1

# LEAK-AND VIBRATION-PROOF VALVE

## Technical Field

The present invention relates to a valve for the leak-and vibration-proof ventilation of electro-chemical accumulator batteries with a freely moving electrolyte, or of similar devices with a liquid-containing casing.

The invention relates in particular to a device of this kind with a valve housing and therein a horizontal plane valve with a valve opening via which the casing is intended to be in communication with the atmosphere when the casing is in its normal position, that is to say standing on an essentially horizontal surface.

## Prior Art

The need for leak-proof valves is well known in the case of electro-chemical accumulator batteries with a freely moving electrolyte, for example nickel/cadium and lead-acid accumulators. The transport of such accumulators without a leak-proof valve requires the fitting of special transport seals, or requires transport to take place without the electrolyte being present. In many applications there is also a distinct need for leak-proof characteristics, such as in various types of craft, for example boats, in light buoys and in off-shore installations.

This need is evidenced by a large number of patents over the years. GB-A-17 308, filed in 1910, illustrates a principle which is still in use in further developed forms. According to this patent a valve seal is connected via a valve opening to a freely moving weight, which may have the form of a ball, and subsequently preferably a cone. The valve seal is always positioned against the under side of the valve opening, whilst the weight is situated higher up in the valve housing. In its normal position, which involves close parallelism between a central axis passing through the valve and the vertical line, the passage through the valve opening is free. A change in position exceeding certain minimum angle relative to the vertical line will cause the weight to change position and at the same time to draw the seal against the valve opening, in so doing closing it. Reference may be made to US-A-2 405 736, DE-C-968, DE-C-968 514 and GB-A-2 061 600 as examples of further valves in accordance with this principle.

According to another prior technique, closing of the valve is achieved by a moving body acting directly against the under surface of a valve disc, which body on moving from its normal position forces the valve disc up against the valve opening, in so doing closing same. This principle may be exemplified by US-A-1 363 263, US-A-2 351 177 and DE-C-1 180 431.

Certain of the valves in accordance with the principles described above suffer from the disadvantage that they do not guarantee that the valve opening will be clear once the normal position is restored if an increase in pressure has occurred inside the casing during its closed state. In other designs this problem has been resolved in various ways. One example of this is provided by the above-mentioned US-A-2 405 736. Nevertheless, the previously disclosed valves suffer from the common and considerable disadvantage that the valve lacks an emergency opening function in the closed position. An increase in pressure inside the casing can thus result in the casing bursting, which can have considerable harmful consequences. A further disadvantage of previously disclosed valves is that leak-proof characteristics are not guaranteed in the event of jolting or vibrations.

## The Invention

These disadvantages are eliminated by a valve of the kind described by way of introduction, in that a sealing disc in accordance with the invention is spring biased against the upper surface of the valve opening and has a rigid valve spindle which projects into a space in the valve housing, which has a cone-shaped bottom and also contains a ball which tilts the valve spindle from its vertical position with the valve housing in an upright position, so that the angled position of the valve disc causes the valve opening to be uncovered, and which ball is moved away from the valve spindle with the valve housing in an inclined position, so that the valve disc sealingly engages the valve opening.

The valve disc is preferably forced against the valve opening by a spring element, such as a helical spring, a spring washer or an elastic body. The force with which the valve disc is pressed against the valve opening should be adapted to correspond to the maximum permissible pressure inside the casing. Harmful overpressure will be prevented in this way from being generated inside the casing, irrespective of its position.

In one embodiment, which is particularly applicable when the available space inside the casing is extremely limited, the space with the cone-shaped bottom is arranged above the plane containing the valve opening, in which case the valve opening constitutes the centre of the bottom surface of the space.

In another embodiment, which can be used when the space inside the casing permits, and especially when a low external profile desirable, the space with its cone-shaped bottom is arranged below the plane with the valve openings, in conjunction with which the space is provided with a drainage opening at the centre of the bottom surface and with ventilation openings leading into the casing in an elevated postion.

The ball contained inside the valve housing is preferably made of a metallic material, such as iron or lead alloy, or of glass or a ceramic material.

The valve housing is preferably separated from the atmosphere by an explosion-suppressing porous disc.

## Brief Description of the Drawings

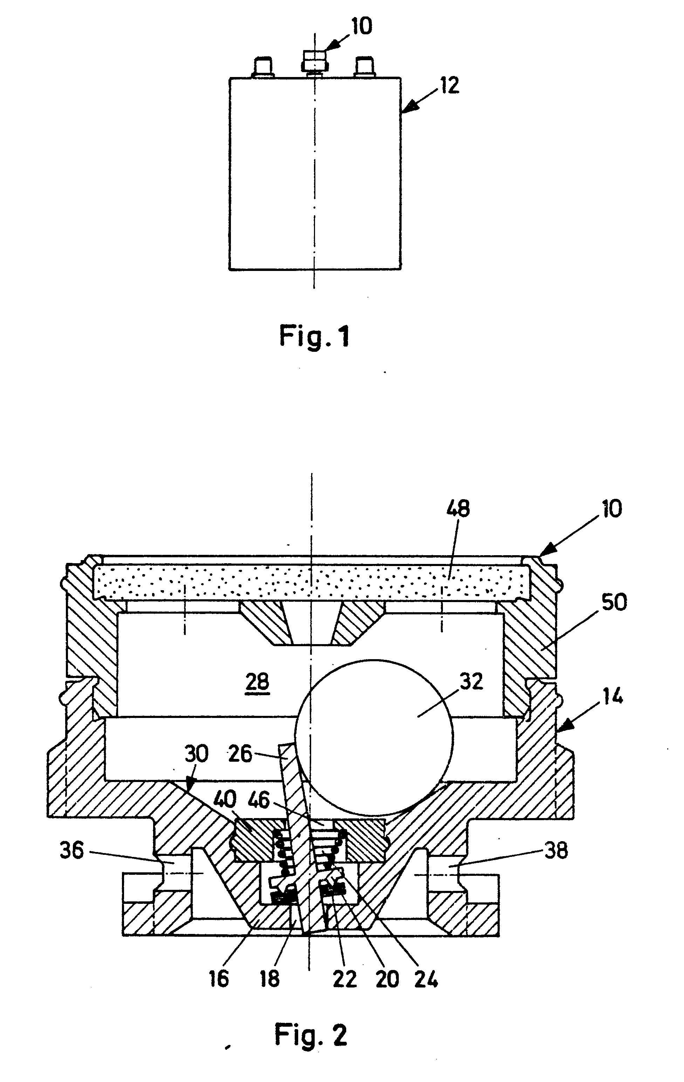

The invention is now described in more detail with reference to the accompanying drawings, in which Fig. 1 shows in diagrammatic form an accumulator cell with a valve in accordance with the invention, and Figs. 2-5 are sections through four examples of embodiments in accordance with the invention.

## Description of Preferred Embodiments

The numeral 10 is used in the Figures to designate a leak-proof valve in accordance with the invention intended for electro-chemical accumulators or similar arrangements with a liquid-containing casing 12.

The valve is housed in a valve housing 14, preferably of circular cross-section. The housing 14 includes a horizontal plane 16 with a valve opening 18, via which the casing 12 is intended to be in communication with the atmosphere when the casing is in its normal position, that is to say standing on an essentially horizontal surface, when the axis of symmetry passing through the valve is essentially parallel with the vertical line. A sealing valve disc 20 of circular cross-section and with a seal 22 beneath it is forced by spring pressure against the upper surface of the valve opening.

The valve disc is forced against the valve opening by a spring element 24. In the embodiments in accordance with Figs. 2-5 this consists of a helical spring, but the element may as an alternative consist of a spring washer or an elastic body. The force with which the valve disc 20 is forced against the valve opening 28 should be so adapted as to correspond to the maximum permissible pressure inside the casing 12. In this way the valve is provided with an emergency opening function, which prevents harmful overpressure from being generated inside the casing, irrespective of its position.

At its centre the valve disc 20 is provided with a rigid valve spindle 26 which projects into space 28 in the valve housing 14, which space is formed symmetrically about a central axis passing through the valve opening 18 and has an essentially concave, cone-shaped bottom surface 30. The space 28 contains a ball 32 which displaces the valve spindle 26 sideways with the valve in its upright position, so that the valve disc 20 adopts an angled or inclined position in relation to the plane 16 and thus uncovers the valve opening 18. With the valve in an inclined position the ball is moved away from the valve spindle, so that the valve disc is in sealing contact with the valve opening.

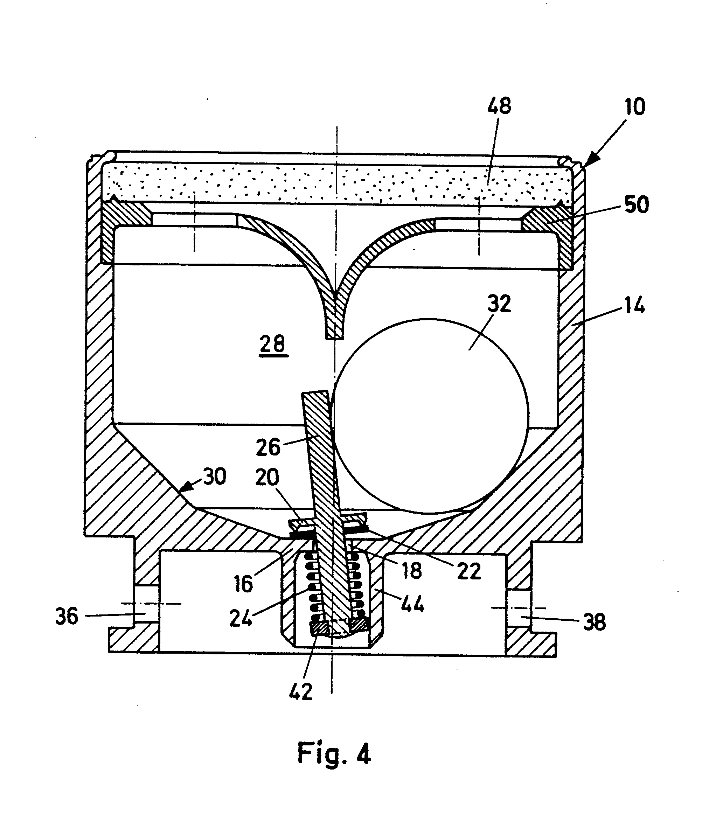

The space 28 can be arranged either above or below the plane 16 containing the valve opening. If the available space inside the casing 12 is extremely limited, an embodiment with the space 28 above the plane 16 may be appropriate, for example in accordance with Figs. 2 and 4. The valve opening 18 thus constitutes the centre of the bottom surface of the space.

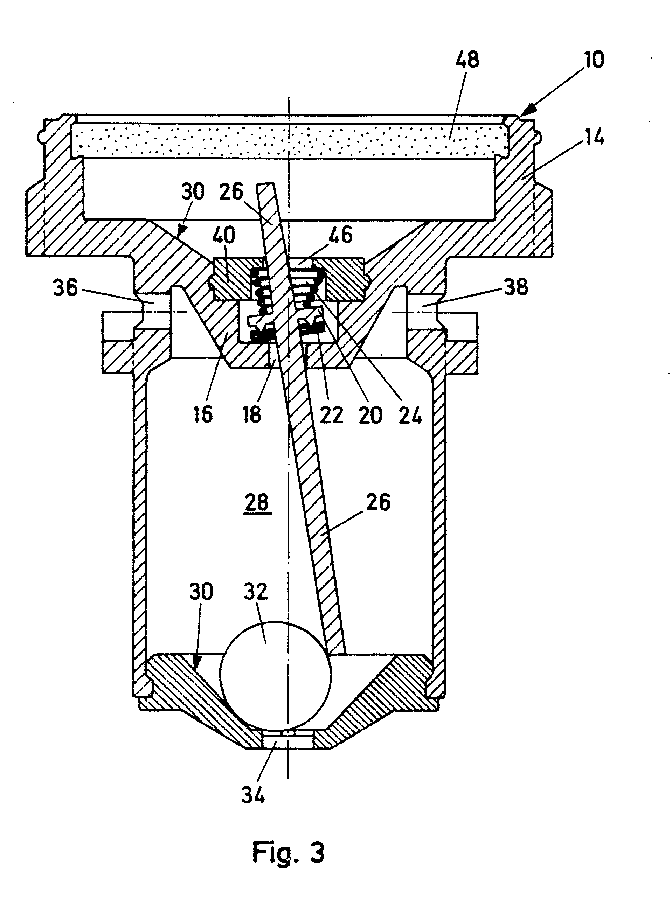

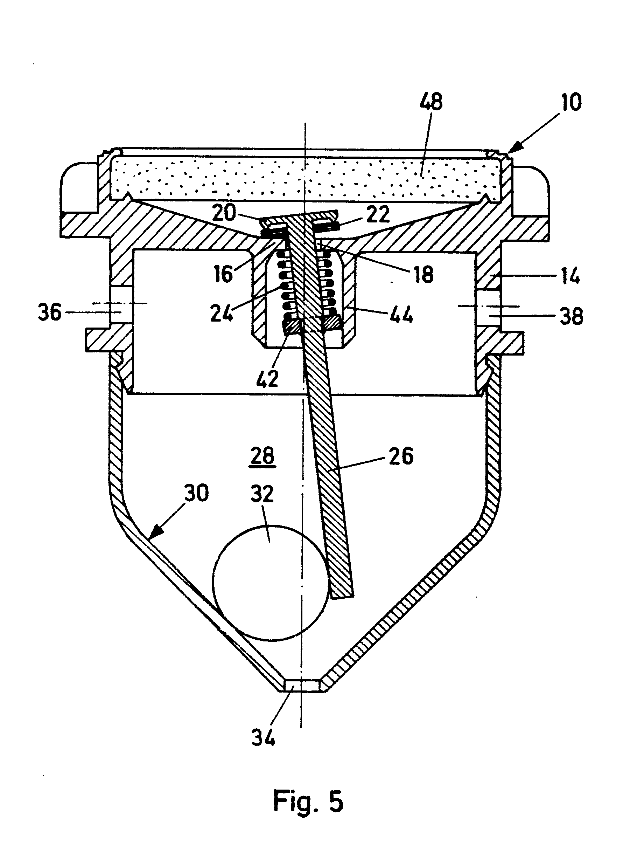

If the space inside the casing permits, and especially when a low external profile is desirable, the space 28 with a cone-shaped bottom may be arranged below the plane 16. In this case it is provided with a drainage opening 34 at the centre of the bottom surface and with ventilation openings 36, 38 leading into the casing 12 in an elevated position, as shown in Figs. 3 and 5.

Sideways displacement of the valve spindle 26 in order to uncover the valve opening 18 requires the ball 32 to act against the valve spindle whilst generating a moment of force which exceeds the moment of force of the element 24 working against it. This is achieved by appropriate dimensioning of the length of the valve spindle to the point at which it touches the ball, the mass of the ball, and the angle of inclination to the cone-shaped bottom surface 30. Account is also taken in this respect of the smallest angle between the axis of symmetry of the valve and the vertical line at which the valve is to be closed, and at which the moment of force attributable to the effect of the ball is thus not capable of causing the valve spindle to be displaced sideways.

The ball 32 is preferably made of a metallic material, such as an iron or lead alloy, or of glass or ceramic material.

The diameter of the ball shall be less than the difference between one half of the diameter of the space 28 and one half of the diameter of the valve spindle 26. Small external dimensions for the valve are often desirable, not least in battery applications. If this is to be achieved, the diameter of the ball must be comparatively small. At the same time, however, it is essential for the mass of the ball to exhibit a certain minimum value if the above-mentioned moment of force is to be achieved, for which reason the density of the material of the ball should be relatively high, which gives preference to metallic materials.

The spring 24 can be installed either against the upper side of the valve disc 20, as shown in the arrangements in accordance with Figs. 2 and 3, or against the lower side of the plane 16, as shown in the arrangements in accordance with Figs. 4 and 5. The spring can be retained either by means of a holder 40 in the valve body 14, as in Figs. 2 and 3, or by means of a holder 42 on the valve spindle 26 in accordance with Figs. 4 and 5. It may be appropriate in this case to arrange the spring so that it is protected against mechanical actuation. In the embodiments according to Figs. 2 and 3 the plane 16 has been lowered for this purpose, thereby producing a protective space which is bounded at the top by the holder 40. In the embodiments in accordance with Figs. 4 and 5 the valve housing 14 beneath the plane 16 has been formed as a tube 44 around the spring element. In the example in accordance with Fig. 5 the valve housing preferably can be so dimensioned that, when the valve is inclined, the ball is free to move in the space between the outer wall of the valve housing and the tubular guard 44.

The sideways displacement or inclination of the valve spindle 26 can appropriately be maximized. In the arrangements in accordance with Figs. 2 and 3 this is achieved by causing the lateral movement of the valve spindle to be restricted by the valve opening 18 and/or by the opening 46 for the valve spindle in the holder 40. In the designs in accordance with Figs. 4 and 5 a clearance between the holder 42 and the tube 44 is utilized in order to restrict the movement of the spindle.

The valve housing may conveniently be separated from the atmosphere by an explosion-suppressing porous disc 48. This disc may in itself constitute the upper boundary of the valve, as will be appreciated from Figs. 3 and 5. In those embodiments in which the space 28 is arranged above the plane 16, the disc 48 may be positioned on a support 50 as a means of guarding against the mechanical actuation of the ball. The support 50 may preferably be so arranged that the ball is prevented with the valve in the closed position, from making contact with the valve spindle, even if the valve is subjected to jolts or vibrations whilst in that position. Examples of this design are shown in Figs. 2 and 4.

In embodiments where the space 28 is below the plane 16, as shown in Figs. 3 and 5, any undesired opening of the valve by jolting or vibrations is prevented by the fact that the ball, on being moved away from the valve spindle, moves closer to the plane 16. Any action by the ball against the spindle will thus occur with a smaller lever effect, and thus with a smaller moment of force than is required for the sideways displacement of the valve spindle.

The valve in accordance with the invention thus guarantees the following functions:

a) The valve is open if the axis symmetry passing through the valve is close to parallel with the vertical line.

b) The valve is open if the pressure inside the casing exceeds a predetermined value; emergency opening function.

c) The valve is closed if a predetermined angle between the axis of symmetry passing through the valve and the vertical line is exceeded.

d) The valve is closed in spite of jolting and vibrations in the position specified in c) above.

## Industrial Application

The valve in accordance with the present invention represents a major advance, in that leak-proof characteristics and security against leakage in the event of jolts or vibrations are afforded by simple means, as is an open passageway in the valve both in the normal position and in the presence of high internal pressure, i.e. emergency opening function. The simplicity of the valve makes it particularly reliable in operation, in addition to which it can also be adapted to suit highly variable conditions of available space.

## Claims

1. A leak-proof valve for an electro-chemical accumulator or similar arrangement with a liquid-containing casing (12), comprising a valve housing (14) and therein a horizontal plane (16) with a valve opening (18), via which the casing (12) is intended to be in communication with the atmosphere when the casing is in its normal position, that is to say standing on an essentially horizontal surface, **characterized** in that a sealing valve disc (20) is spring biased against the upper surface of the valve opening (18) and has a rigid valve spindle (26) which projects into a space (28) in the valve housing, which has a cone-shaped bottom (30) and also contains a ball (32) which tilts the valve spindle from its vertical position with the valve housing in an upright position, so that the angled position of the valve disc causes the valve opening to be uncovered, and which ball is moved away from the valve spindle with the valve housing in an inclined position, so that the valve disc sealingly engages the valve opening.

2. A valve according to claim 1, **characterized** in that the valve disc (20) is forced against the valve opening by a spring element (24) such as a helical spring, a spring washer or an elastic body.

3. A valve according to claim 1, **characterized** in that the space (28) with its cone-shaped bottom is arranged above the plane (16) with the valve opening in the centre of the bottom surface of the space.

4. A valve according to claim 1, **characterized** in that the space (28) with its cone-shaped bottom is arranged below the plane (16) with a drainage opening 834) at the centre of the bottom surface and with ventilation openings (36, 38) leading into the casing (12) situated in an elevated position.

5. A valve according to claim 1, **characterized** in that the ball (32) is made of a metallic material, such as an iron or lead alloy, or of glass or a ceramic material.

6. A valve according to claim 1, **characterized** in that the valve housing (14) is separated from the atmosphere by an explosion-suppressing porous disc (48).

0 222 447

11·66

Fig. 1

Fig. 2

Fig. 3

Fig. 4

Fig. 5

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | FR-A-2 541 250 (PEROLO S.A.)<br><br>* Figures 1,2; claims 1,2,4; page 1, lines 7-16; page 6, line 6 - page 7, line 30; page 8, lines 8-18; page 8, line 36 - page 9, line 5 * | 1-3,5, 6 | H 01 M 2/12<br>F 16 K 17/36 |
| Y | | 4 | |
| Y | US-A-3 996 951 (E.W. PARR et al)<br>* Figures 2,4; claim 1 * | 4 | |
| A | US-A-2 232 279 (A.H. SNYDER)<br>* Figures 1-4; claim 1 * | 1 | |
| D,A | US-A-4 352 364 (J.A. ORSINO et al.)<br>* Column 3, lines 21-31; figure 1 * | 6 | **TECHNICAL FIELDS SEARCHED (Int. Cl.4)**<br><br>H 01 M<br>F 16 K |
| A | EP-A-0 040 311 (VARTA)<br>* Figure 5; page 3, lines 25-35 * | 6 | |
| A | US-A-2 376 123 (H.A. COHEN)<br>* Page 2, lines 50-52 * | 5 | |

The present search report has been drawn up for all claims

| Place of search | Date of completion of the search | Examiner |
|---|---|---|
| THE HAGUE | 13-02-1987 | D'HONDT J.W. |